# EUROPÄISCHE PATENTSCHRIFT

(11) **EP 0 868 255 B1**
(45) Veröffentlichungstag und Bekanntmachung des Hinweises auf die Patenterteilung: **08.09.1999**
(21) Anmeldenummer: 96941150.3
(22) Anmeldetag: 19.12.1996
(51) Int. Cl.: B23Q 1/54

(54) **VORRICHTUNG ZUR RÄUMLICHEN GESTEUERTEN BEWEGUNG EINES KÖRPERS IN DREI BIS SECHS FREIHEITSGRADEN**
DEVICE FOR SPATIALLY MOVING A BODY WITH THREE TO SIX DEGREES OF FREEDOM IN A CONTROLLED MANNER
DISPOSITIF DE DEPLACEMENT CONTROLE D'UN CORPS AVEC TROIS A SIX DEGRES DE LIBERTE DANS UN ESPACE

(30) Priorität: 20.12.1995 CH 360095
(43) Veröffentlichungstag der Anmeldung: 07.10.1998
(73) Patentinhaber: Wiegand, Alexander Konrad, 63906 Erlenbach am Main (DE)
(72) Erfinder: WIEGAND, Alexander, Konrad, D-63906 Erlenbach (DE); WEIKERT, Sascha, CH-8127 Forch (CH)
(74) Vertreter: Blum, Rudolf Emil Ernst
(86) Internationale Anmeldenummer: IB9601454
(87) Internationale Veröffentlichungsnummer: WO9722436

(56) Entgegenhaltungen:
- EP-A- 0 263 627
- WO-A-92/17313
- US-A- 4 645 084
- US-A- 5 378 282

## Beschreibung

Die Erfindung betrifft eine Bewegungsvorrichtung für eine Werkzeugmaschine oder einem Manipulator gemäss dem Oberbegriff des unabhängigen Patentanspruchs 1.

Bei einem solchen Gerät kann der zu bewegende Maschinenteil im Raum in bis zu drei translatorischen und drei rotatorischen Freiheitsgraden relativ zu einer Basis bewegt werden, indem mehrere Schlitten, die mit jeweils einem starren Gelenkstab über geeignete Gelenke mit dem zu bewegenden Körper verbunden sind, auf mindestens zwei parallelen Linearführungen verschoben werden.

Werkzeugmaschinen für die spanende Bearbeitung haben in erster Linie die Aufgabe, zwischen einem Werkzeug und einem Werkstück bestimmte Relativbewegungen zu ermöglichen. Die am häufigsten eingesetzten Fräsmaschinen sind dreiachsige Maschinen. Bei diesen kann das Werkzeug neben der rotatorischen Schnittbewegung in drei translatorischen Freiheitsgraden relativ zum Werkstück bewegt werden. Daneben werden auch vier- und fünfachsige Maschinen eingesetzt, bei denen das Werkzeug zusätzlich noch in einem oder zwei rotatorischen Freiheitsgraden relativ zum Werkstück bewegt werden kann.

Die meisten konventionellen Werkzeugmaschinen haben eine serielle kinematische Struktur. Die benötigte Anzahl Freiheitsgrade wird durch Hintereinanderschalten der entsprechenden Anzahl Linear- und Rotationsachsen erreicht. Es ist jedoch zunehmend erwünscht, dass einerseits die Steifigkeit der Maschine möglichst hoch ist, und andererseits sollten die zu bewegenden Massen möglichst gering sein, damit zusätzlich auftretende Massenkräfte klein bleiben. Für solche Anforderungen sind Maschinen mit serieller kinematischer Struktur weniger gut geeignet, da hier die unterste Bewegungsachse das gesamte Gewicht der über ihr liegenden mitbewegen muss. Zudem addieren sich die Bewegungsfehler aller Achsen, seien sie nun thermisch, geometrisch oder durch die auftretenden Belastungen bedingt.

Von ihrer kinematischen Struktur her besser geeignet für hohe Anforderungen an Dynamik und Genauigkeit sind Werkzeugmaschinen mit paralleler kinematischer Struktur, wie sie seit wenigen Jahren existieren und in WO 92/17313, EP-A-0534 585 oder US 4,988,244 beschrieben sind. Diese Maschinen basieren auf der sogenannten verallgemeinerten Stewart-Plattform. Der zu bewegende Maschinenteil wird mittels sechs teleskopartiger, angetriebener Beine bewegt. Die zu bewegenden Massen sind geringer als bei seriellen Strukturen und die Fehler der einzelnen Bewegungsachsen addieren sich nicht. Es wirken nur Kräfte in achsialer Richtung der Beine, in der sie die höchste Steifigkeit aufweisen. Biegebeanspruchungen, wie sie bei seriellen Anordnungen auftreten, kommen nicht vor.

Der Nachteil dieser Maschinen besteht darin, dass der zur Verfügung stehende Arbeitsraum im Vergleich zur gesamten Grösse der Maschine relativ klein ist. Eine Vergrösserung des Arbeitsraums ist mit einer entsprechenden Vergrösserung der gesamten Maschine verbunden und entsprechend mit einem Verlust an Dynamik, da die Beine grösser, schwerer und weniger steif werden. Ein weiterer Nachteil besteht darin, dass diese Maschinen kaum aus konventionellen Standardkomponenten aufgebaut werden können. Ferner schlägt nachteilig zu Buche, dass diese Maschinen immer sechs Achsen aufweisen, demzufolge sie sechs Antriebe, Führungen und Messysteme benötigen, obwohl Fräsmaschinen maximal fünf Achsen brauchen, in den meisten Fällen sogar drei Achsen ausreichend sind.

J.M. Hervé und F. Sparacino beschreiben in "Theory and Practice of Robots and Manipulators", A. Morecki, G. Bianchi, K. Jaworek (Herausg.), Springer pp. 301ff verschiedene Robotermanipulatoren, unter anderem auch ein Modell, das dem Oberbegriff des Patentanspruchs 1 entspricht, drei parallelen Schraubspindeln, wobei auf jeder Schraubspindel eine Mutter bewegt wird. Auf jeder Mutter sind zwei zu einem Parallelogram verbundene Beine gelenkig befestigt. Diese Vorrichtung ist jedoch nicht für Werkzeugmaschinen geeignet, da sie nicht genügende Stabilität und Genauigkeit gewährleistet.

Der Erfindung liegt die Aufgabe zugrunde, eine Vorrichtung der eingangs genannten Art zu realisieren, die die oben erwähnten Nachteile der auf der Stewart-Plattform beruhenden Maschinen möglichst weitgehend vermeidet und insbesondere trotz guter Beweglichkeit baulich einfach ist.

Diese Aufgabe wird vom Gegenstand des unabhängigen Patentanspruchs gelöst.

Durch die Verwendung von parallelen Schienen wird eine lineare Vergrösserung des Arbeitsbereichs ermöglicht. Da gleichzeitig mindestens vier unabhängig voneinander verfahrbare Schlitten vorgesehen sind, kann trotz dieser eindimensionalen Vorzugsrichtung erreicht werden, dass der bewegliche Teil nicht nur linear verfahren, sondern auch verkippt werden kann. Damit wird es möglich, mehr verschiedene Positionen einzunehmen und/ oder Ungenauigkeiten auszugleichen. Wenn jedes Bein seinen eigenen Schlitten aufweist, kann sogar eine Bewegung entlang dreier translatorischer und um drei rotative Freiheitsgrade erreicht werden, obwohl alle Schlitten nur parallel verfahrbar sind.

Mindestens eine oder mehrere der Schienen tragen mehr als einen Schlitten, so dass weniger Komponenten benötigt werden. Es wird vorzugsweise ein Teil des Antriebs der entsprechenden zwei Schlitten zusammengefasst, so dass sich der Aufbau weiter vereinfacht. Besonders gut geeignet für einen solchen Aufbau sind elektromagnetische Linearantriebe.

Zur Aufnahme besonders hoher Kräfte sollten die Schienen vorzugsweise entlang ihrer ganzen Länge auf der Basis aufliegen, so dass sie sich nicht verbiegen.

Zur Anpassung der Vorrichtung an den gewünschten Arbeitsraum kann vorzugsweise eines oder mehrere der Beine in der Länge verstellbar sein, z.B. von Hand.

In einer weiteren bevorzugten Ausführung der Vorrichtung sind die Schlitten so gelagert, dass sie sich um eine zur Verfahrrichtung parallele Achse nicht verkippen können, indem z.B. jede Schiene zwei getrennte Schienenstränge aufweist, auf denen der Schlitten aufliegt. Damit wird es möglich, besonders einfache, stabile, handelsübliche Schienen und Schlitten zu verwenden.

Werden auf einem Schlitten zwei Beine angeordnet, so können auf dem Schlitten Mittel vorgesehen sein, mit denen die Relativlage der Beine zueinander und/oder die Relativlage mindestens eines der Beine relativ zum Schlitten gesteuert veränderbar ist. Damit wird die Zahl der Freiheitsgrade erhöht und es wird durch Betätigung des Mittels insbesondere möglich, die Lage des beweglichen Teils nachzujustieren bzw. zusätzliche Rotationsfreiheitsgrade zu ermöglichen, um z.B. Ungenauigkeiten in der Schienenführung auszugleichen.

Die Erfindung eignet sich besonders zur Anordnung in einer Werkzeugmaschine und ist geeignet, die dort geltenden hohen Anforderungen an Präzision und Kraftaufnahme zu erfüllen.

Weitere Vorteile und Anwendungen der erfindungsgemässen Vorrichtung ergeben sich aus der nun folgenden Beschreibung eines Ausführungsbeispiels anhand der Figuren. Dabei zeigen:
Fig. 1 eine perspektivische Gesamtansicht einer bevorzugten Ausführung der Erfindung,
Fig. 2 eine Detailzeichnung eines Schlittens mit dem dazugehörigen Gelenk,
Fig. 3 eine Detailzeichnung eines plattformseitigen Gelenkes,
Fig. 4 eine Detailzeichnung einer plattformseitigen Gelenkvariante, bei der zwei Stäbe in einem Gelenk mit der Plattform verbunden sind,
Fig. 5 eine Seitenansicht der Gelenkvariante nach Fig. 4,
Fig. 6 eine schematische Darstellung eines Ausführungsbeispiels der Vorrichtung als Fräsmaschine,
Fig. 7 eine schematische Darstellung eines Ausführungsbeispiel der Vorrichtung als Fräsmaschine, deren Arbeitsraum von drei Seiten zugänglich ist,
Fig. 8 eine schematische Darstellung eines Ausführungsbeispiels der Vorrichtung als Fräsmaschine mit sehr einfachem Maschinenbett,
Fig. 9 eine Plattform der Vorrichtung mit zwei zusätzlichen Rotationsachsen,
Fig. 10 eine Vorrichtung mit nur drei Schlitten, und
Fig. 11 eine gegenüber der Ausführung nach Fig. 10 verbesserte Vorrichtung.

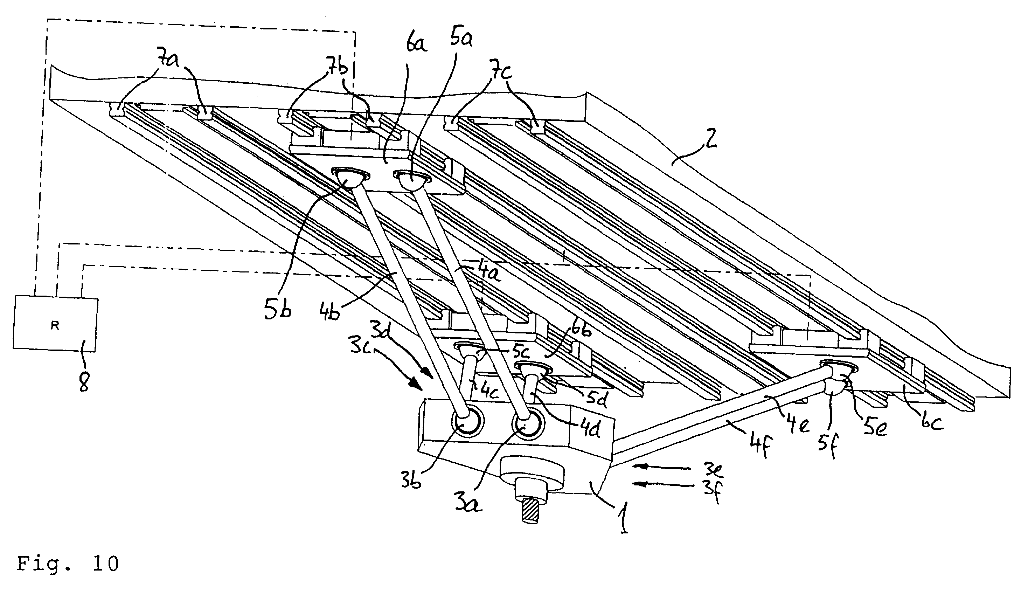

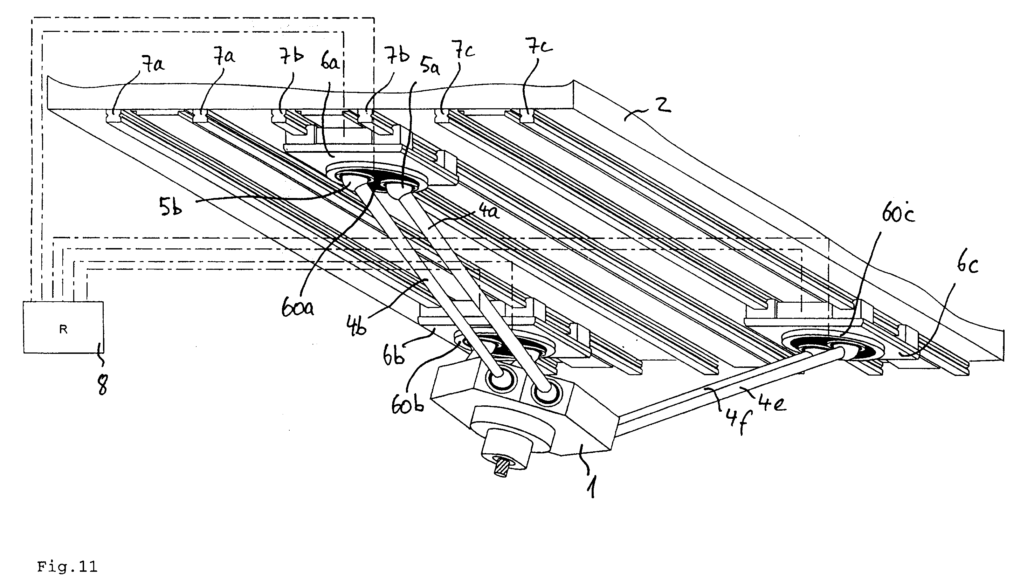

Die Ausführungen gemäß Figuren 10 und 11 stellen keine Ausführungsarten der Erfindung, sondern Beispiele, die das Verständnis der Erfindung erleichtern, dar.

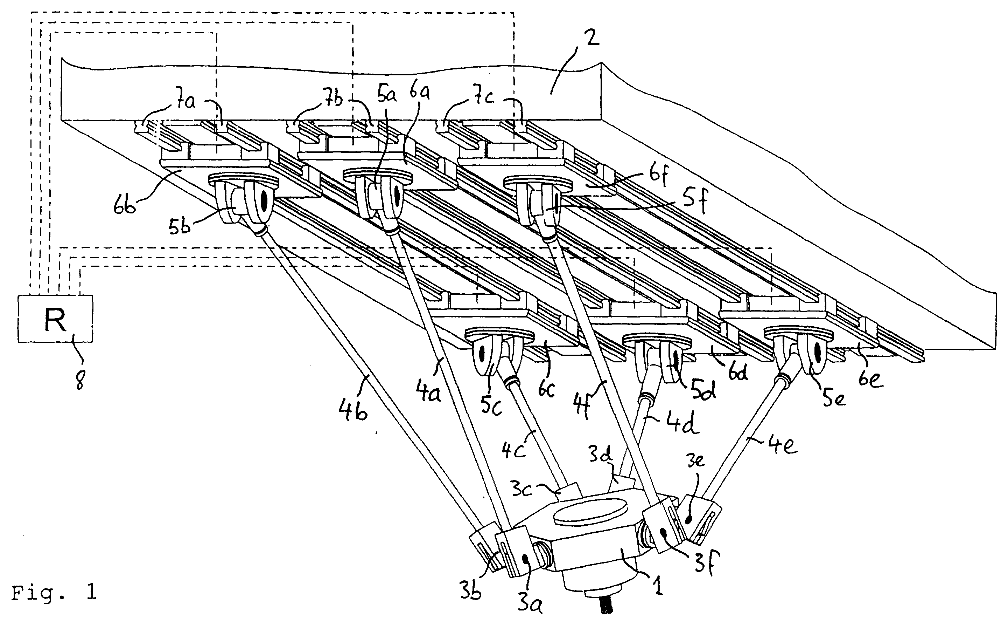

Der Grundaufbau einer bevorzugten Ausführung der Erfindung ergibt sich aus Figur 1. Eine Arbeitsplattform 1 bildet den zu bewegenden Teil der Vorrichtung. Sie dient als Träger für ein Arbeitsgerät, zum Beispiel eine Frässpindel, oder für ein Werkstück und soll relativ zu einer Basis 2 in sechs Freiheitsgraden bewegt werden. Die Arbeitsplattform 1 ist über Gelenke 3a-3f mit den Enden von sechs starren Stäben 4a-4f verbunden. Die anderen Enden der sechs starren Stäbe sind über Gelenke 5a-5f mit sechs Schlitten 6a-6f verbunden. Jeweils zwei Schlitten werden auf einer von drei parallelen Linearführungen 7a-7c geführt, die fest mit der nicht bewegten Basis 2 verbunden sind. Jeder Schlitten verfügt über einen Antrieb und ein Positionsmessystem. Mit Hilfe einer Steuerung 8 lassen sich die Positionen der Schlitten synchron relativ zur Basis steuern. Damit kann die Plattform 1 gezielt im Raum in sechs Freiheitsgraden bewegt werden.

Die Linearführungen 7a-7c wirken als Schienen und haben die Aufgabe, alle Freiheitsgrade der Bewegung der Schlitten 6a-6f mit Ausnahme einer Verschiebung in Richtung der Linearführung einzuschränken und die durch die Stäbe übertragenen Kräfte aufzunehmen. Die Linearführungen 7a - 7c bzw. die zwei Schienenstränge, die je eine Linearführung bilden, liegen auf ihrer ganzen Länge direkt oder indirekt an der planaren Oberfläche der Basis 2 auf und sind mit dieser verbunden. Sie können somit ohne Verbiegung grosse Kräfte aufnehmen.

Die Schlitten 6a-6f sind in den Linearführungen geführt, wobei eine Verkippung der Schlitten um eine zur Verschiebungsrichtung parallele Achse verhindert wird. Eine solche Lagerung lässt sich mittels handelsüblichen, preiswerten Linearführungen und Schlitten realisieren.

Ein anderer, nicht zur Erfindung gehöriger Grundaufbau der Vorrichtung wird in Fig. 10 gezeigt. Auf diesen Aufbau wird am Ende der Beschreibung eingegangen.

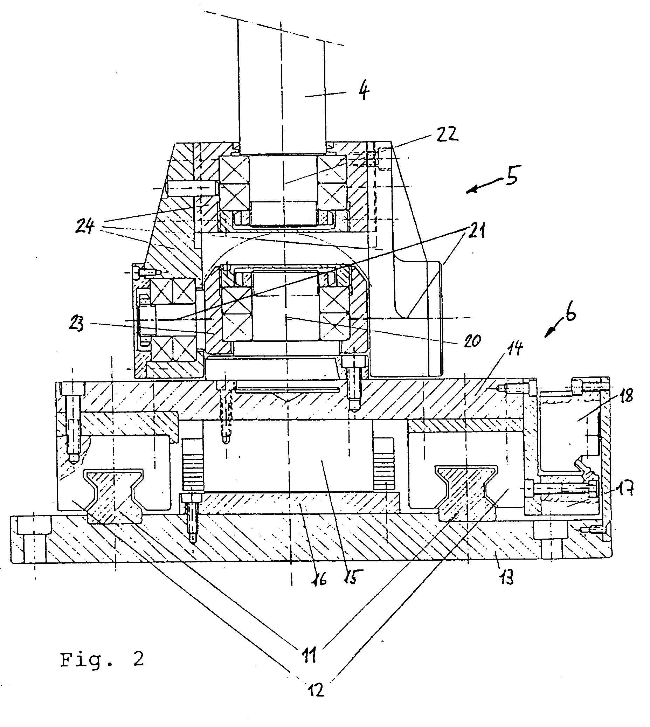

Fig. 2 zeigt eine beispielhafte Ausführung eines Schlittens mit Führung, Gelenk und einem Stab. Die Linearführungen sind als Wälzführungen realisiert, die jeweils aus zwei Schienensträngen 11 bestehen, auf denen pro Schlitten 6 vier Wagen 12 mit Wälzkörperumlauf fahren. In Fig. 2 sind nur zwei der Wagen 12 zu sehen. Die Schienen sind auf einer nicht bewegten, mit der Basis 2 verbundenen Grundplatte 13 fest montiert. Auf den vier Wagen 12 ist jeweils eine Platte 14 befestigt. Auf der einen Seite der Platte 14 ist das Gelenk 5 montiert, welches die Platte 14 mit dem Stab 4 verbindet. Auf der anderen Seite der Platte 14 befindet sich eine Spulenanordnung eines Primärteils 15 eines Linearmotors. Der Sekundärteil 16 des Linearmotors ist zwischen den Schienen 11 fest mit der Basis 13 verbunden und erzeugt das Magnetfeld für alle Schlitten einer Linearführung. Die Linearmotoren sind die Antriebe der Schlitten. Alternativ können auch andere Antriebsprinzipien hydraulischer, pneumatischer oder elektrischer Natur eingesetzt werden. Damit sich auf einer Führung mehrere Schlitten bewegen können, die auf gemeinsame Komponenten eines Antriebs zurückgreifen, bieten sich als Alternative zum Linearmotor insbesondere Kugelgewindetriebe an, die eine feststehende Spindel und eine angetriebene Mutter aufweisen, wobei sich die Mutter inklusive Motor mit dem Schlitten mitbewegt, oder ein Zahnstangenantrieb, bei dem die Zahnstange auf der Basis befestigt ist und sich die Zahnräder mit dem Antrieb auf den Schlitten befinden und sich mit diesen mitbewegen.

An jedem Schlitten ist ein Abtastkopf 17 angebracht, der zur Positionserfassung einen Linearmassstab 18 abtastet. Die Schlitten, die sich auf der gleichen Führung befinden, können denselben Linearmassstab abtasten. Die Positionserfassung der Schlitten kann auch mit anderen Messverfahren, wie zum Beispiel Laserinterferometrie oder, bei der Verwendung von Kugelgewindetrieben oder Zahnstangenantrieben, über eine Winkelmessung erfolgen.

Auf der Oberseite eines jeden Schlittens 6 ist das Gelenk 5 angebracht, welches ihn mit dem Ende des Stabes 4 verbindet. Das andere Ende des Stabes 4 ist ebenfalls mit einem Gelenk 3 mit der Plattform 1 verbunden. Die beiden Gelenke schränken alle translatorischen Relativbewegungen der Körper, die sie verbinden, ein und lassen nur Rotationsbewegungen zu. Pro Stab 4 müssen an einem der beiden Gelenke mindestens drei und an dem anderen mindestens zwei Rotationsfreiheitsgrade vorhanden sein, damit die Plattform sechs Freiheitsgrade der Bewegung aufweist. Aus konstruktiven Gründen oder um grössere Bewegungen in den Gelenken zuzulassen, kann es sinnvoll sein, die Anzahl der Rotationsfreiheitsgrade über das erwähnte Mass hinaus zu erhöhen. In Fig. 2 ist beispielhaft eine Ausführungsvariante des schlittenseitigen Gelenks 5 dargestellt. Es besteht aus einer Kombination von drei Drehgelenken mit Drehachsen 20, 21, 22 und den Zwischenstücken 23, 24. Die Drehachse 20 des ersten Drehgelenks, welches den Tisch 14 mit dem ersten Zwischenstück 23 verbindet, ist senkrecht zur Tischebene des jeweiligen Schlittens 6. Die Drehachse 21 des zweiten Drehgelenks, welches das erste Zwischenstück 23 mit dem zweiten Zwischenstück 24 verbindet, ist senkrecht zur Achse 20 des ersten Drehgelenks. Die Drehachse 22 des dritten Drehgelenks, welches das zweite Zwischenstück 24 mit dem Stab 4 verbindet, ist senkrecht zu der des zweiten Drehgelenks und fällt mit der Stabachse zusammen. Die Drehgelenke sind jeweils durch vorgespannte zweireihige Schrägkugellager realisiert, um eine spielfreie Verbindung zu gewährleisten.

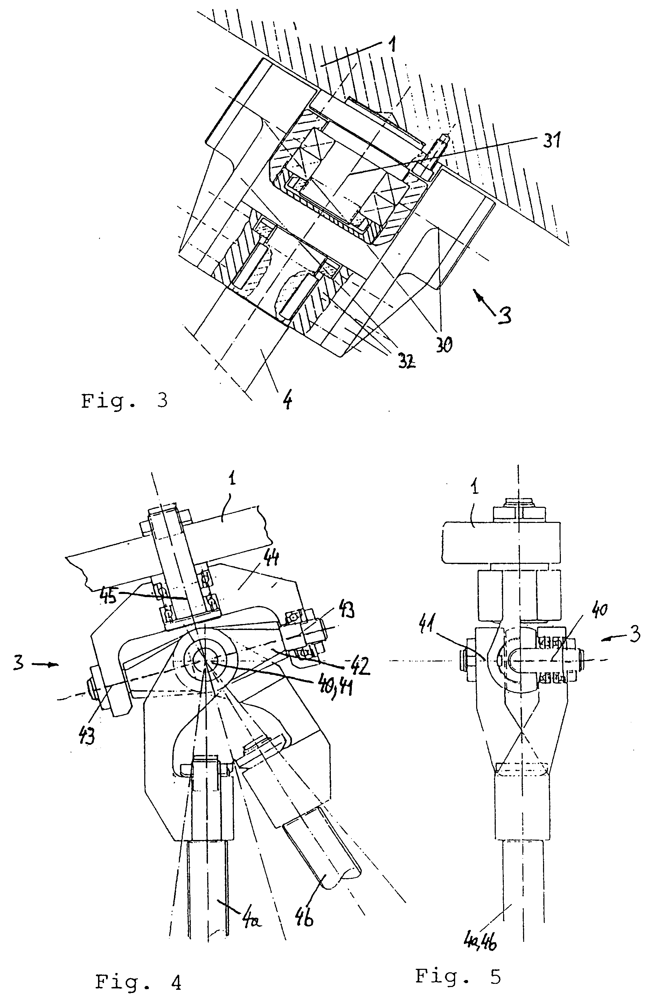

In Fig. 3 ist eine Ausführungsvariante des plattformseitigen Gelenks beispielhaft dargestellt. Es besteht aus einer Kombination von zwei Drehgelenken mit Drehachsen 30, 31 und einem Zwischenstück 32. Die Achse 30 des ersten Drehgelenks, welches den Stab 4 mit dem Zwischenstück 32 verbindet, ist senkrecht zur Stabachse. Die Achse 31 des zweiten Drehgelenks, welches das Zwischenstück 32 mit der Plattform 1 verbindet, ist senkrecht zu der des ersten Drehgelenkes.

Alternativ zu den bisher beschriebenen Gelenkausführungen, die aus einer Kombination von Drehgelenken aufgebaut sind, können auch an beiden Enden der Stäbe oder auch nur an einem Kugelgelenke verwendet werden.

In Fig. 4 und 5 ist eine zweite Ausführungsvariante eines plattformseitigen Gelenkes 3 beispielhaft dargestellt, bei der jeweils zwei Stäbe 4a, 4b mit der Plattform 1 über das gleiche Gelenk 3 verbunden sind. An der Plattform sind dann insgesamt nur noch drei Gelenke 3 vorhanden. Die beiden Stäbe 4a, 4b sind über zwei Drehgelenke, die die gleiche Drehachse 40 bzw. 41 haben, mit einem ersten Zwischenstück 42 verbunden. Das erste Zwischenstück 42 ist über ein Drehgelenk mit Achse 43 mit einem zweiten Zwischenstück 44 verbunden, welches seinerseits über ein Drehgelenk mit Achse 45 an der Plattform 1 befestigt ist. Die Achsen zweier aufeinanderfolgender Drehgelenke sind jeweils senkrecht zueinander. Dies hat den Vorteil, dass jeweils zwei Stäbe ein Dreieck bilden, welches bei feststehenden Schlitten nur noch einen Freiheitsgrad der Drehung um die Achse, die die beiden schlittenseitigen Gelenkpunkte enthält, aufweist, und damit eine stabilere Anordnung darstellt als ein Gelenkviereck, welches mehr Freiheitsgrade hat.

Auf der Plattform 1 kann sich je nach Anwendung ein Arbeitsgerät, ein zu bearbeitendes Werkstück oder eine Greifvorrichtung befinden.

Die Plattform 1 wird im Raum relativ zur Basis 2 bewegt, indem mittels der Steuerung 8 je nach der Bahn, die die Plattform zurücklegen soll, die entsprechenden Positionen der Schlitten berechnet und als Sollwerte an die Regelkreise eines jeden Schlittens übergeben werden.

Im folgenden wird die Anwendung der Erfindung als Fräsmaschine näher beschrieben. In diesem Fall befindet sich auf der Plattform 1 entweder eine Frässpindel oder das zu bearbeitende Werkstück.

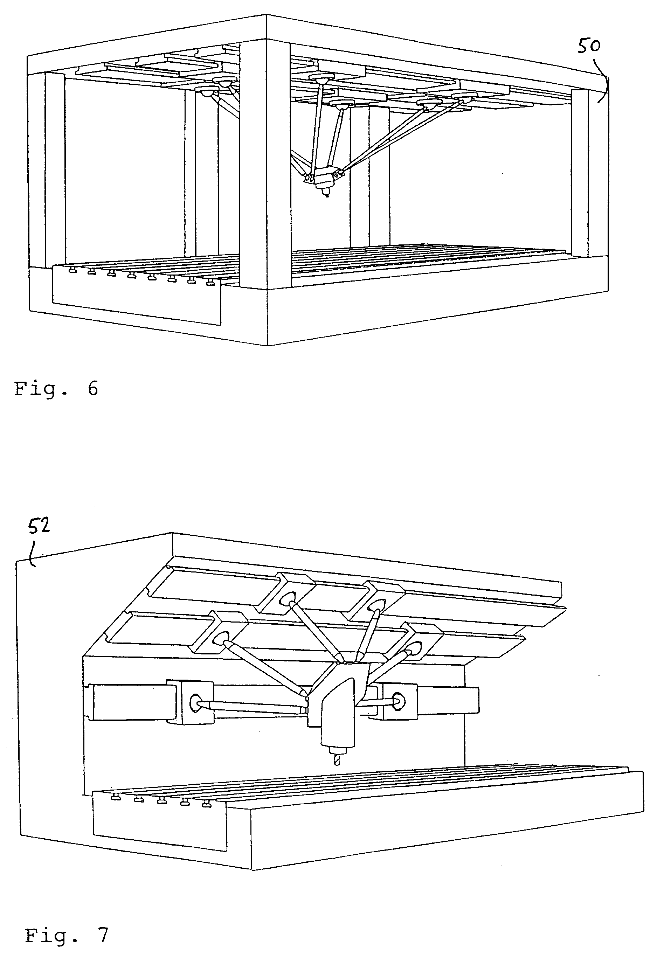

In Fig. 6 - 9 sind verschiedene Ausführungen der Erfindung als Fräsmaschine skizziert. In Fig. 6 wird eine Variante gezeigt, bei der sich die Vorrichtung im Innern einer kastenförmigen Struktur 50 befindet und die Spindel vertikal angeordnet ist. Die Anwendung entspricht derjenigen von konventionellen Fräsmaschinen in Portal- oder Gantrybauweise und ist für grosse Werkstücke im Formenbau oder in der Flugzeugindustrie gedacht.

In Fig. 7 ist eine Fräsmaschine dargestellt, bei der das Maschinenbett 52 c-förmig ist und deren Vorteil darin besteht, dass der Arbeitsraum von drei Seiten zugänglich ist.

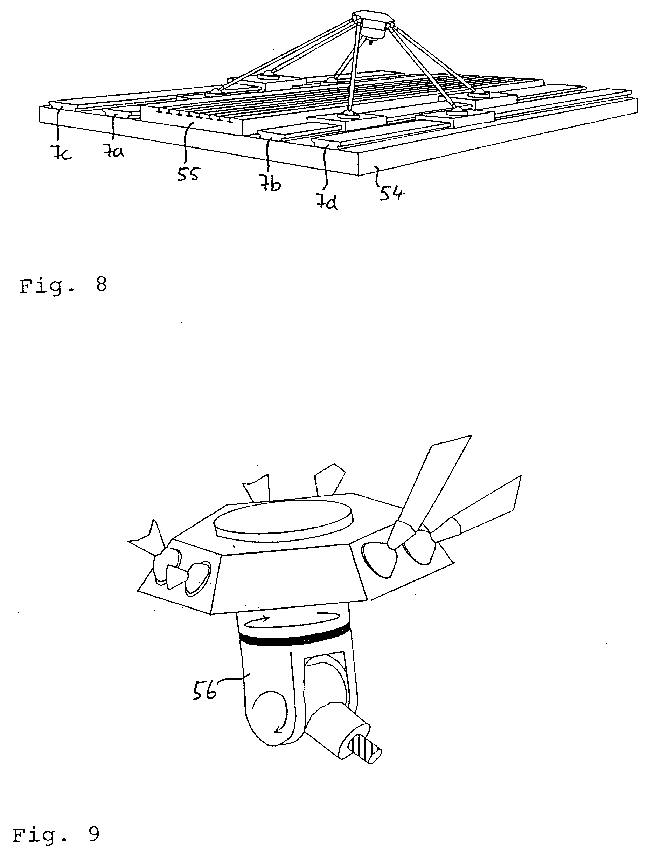

In Fig. 8 wird eine spezielle Ausführung gezeigt, bei der die Bearbeitung im Innern des Raumes stattfindet, der durch die Stäbe aufgespannt wird. Diese Anordnung hat den Vorteil, dass das Maschinenbett 54 eine sehr einfache Form aufweist und deswegen einerseits in der Herstellung sehr günstig ist und andererseits eine sehr hohe Steifigkeit aufweist. In der Mitte des Maschinenbetts 54 sind Mittel 55 zur Aufnahme eines Werkstücks vorgesehen, die den Arbeitsraum bilden. Aus Symmetriegründen und um auf beiden Seiten des Arbeitsraumes gleich viele Schlitten zu bewegen, wurden hier vier statt drei Linearführungen 7a - 7d verwendet. Auf den beiden inneren Führungen 7a, 7b werden jeweils zwei Schlitten bewegt, auf den beiden äusseren Führungen 7c, 7d jeweils nur einer. Denkbar ist auch, auf beiden Seiten des Bearbeitungsraumes insgesamt nur zwei Führungen anzubringen, auf denen alle Schlitten bewegt werden.

Je nach Anordnung der Führungen, den Orten der Gelenke, den Stablängen und dem Ort der Plattform im Raum, kann die Plattform neben der translatorischen Relativbewegung verschieden grosse Rotationsbewegungen durchführen. Diese sind aber immer begrenzt durch Kollisionen der Stäbe untereinander oder mit der Plattform und dadurch, dass der Mechanismus in eine singuläre Stellung kommt. Erfordert die Anwendung grössere Rotationsbewegungen, können auf der Plattform noch zusätzliche Rotationsachsen angebracht werden. In Fig. 9 ist beispielsweise auf der Plattform zusätzlich ein Gabelkopf 56 mit zwei Rotationsachsen montiert.

Je nach Arbeitsraum, der für eine bestimmte Anwendung gewünscht wird, und je nach Steifigkeit, die die Vorrichtung im Arbeitsraum aufweisen soll, werden Anzahl, Lage und Länge der Linearführungen, die Lage der Gelenkpunkte an der Plattform und die Länge der einzelnen Stäbe bei der Konstruktion der zu realisierenden Maschine festgelegt. Um den Arbeitsraum einer bestehenden Maschine an eine bestimmte Bearbeitung anzupassen, können die Stäbe so ausgeführt werden, dass sie, z.B. manuell, in Ihrer Länge indexiert verstellt werden können.

Eine Vorrichtung mit nur drei Schlitten, die keine Ausführung der Erfindung darstellt, ist in Fig. 10 dargestellt. Bei dieser Anordnung kann die Plattform 1 nur in den drei kartesischen Raumrichtungen relativ zu Basis 2 bewegt werden. Jeweils zwei der sechs Beine sind auf einem Schlitten 6a - 6c geführt. Die Schlitten 6a - 6c sind entlang der drei Linearführungen 7a - 7c bewegbar. Auf jedem der drei Schlitten 6a-6c sind die Enden von zwei Stäben 4a - 4f über die Gelenke 5a - 5f montiert. Die anderen Stabenden sind über die Gelenke 3a - 3f mit der Plattform 1 verbunden. Die Gelenkpunkte der Stabpaare 4a, 4b, 4c, 4d, 4e, 4f bilden in jeder Position der Plattform die Eckpunkte eines Parallelogramms. Die Gelenkpunkte der plattformseitigen Gelenke 3a - 3f liegen paarweise auf den Seitenlinien eines Dreiecks. In Fig. 10 sind die beiden Gelenke eines jeden Stabes als Kugelgelenke dargestellt, es sind aber auch Kombinationen von Drehgelenken möglich. Insbesondere wird hierzu auf die Ausführungen gemäss Fig. 3 - 6 verwiesen. Bei der Anordnung von Fig. 10 brauchen in den beiden Gelenken an jedem Stabende jedoch nur zwei Rotationsfreiheitsgrade vorhanden zu sein.

Bei der Variante von Fig. 10 wirken sich Parallelitätsfehler der Linearführungen, geometrische Abweichungen des Ortes der Gelenkpunkte und Fehler in den Stablängen dahingehend aus, dass es bei der Bewegung der Plattform zu Winkelfehlern kommt, die durch die Steuerung 8 nicht kompensiert werden können. Aus diesem Grund kann es sinnvoll sein, auf den Schlitten Mittel vorzusehen, mit denen die Steuerung 8 die Lage der Gelenkpunkte eines Schlittens relativ zueinander oder relativ zum Schlitten gesteuert verändern kann. Dies kann zum Beispiel dadurch bewerkstelligt werden, dass ein Gelenk eines Schlittens entlang einer Linearachse, die sich auf dem Schlitten befindet, gesteuert bewegt wird. Eine andere Möglichkeit besteht in der Verwendung einer auf dem Schlitten befindlichen Rotationsachse, mit der das exzentrisch angebrachte Gelenk auf einer Kreisbahn gesteuert bewegt werden kann. Es können auch beide Gelenkpunkte eines Schlittens um eine auf dem Schlitten angebrachte Rotationsachse gesteuert bewegt und dadurch in ihrer relativen Lage zum Schlitten kontrolliert verändert werden. Eine solche Anordnung ist in Fig. 11 abgebildet. Bei dieser Ausfuhrung, die keine Ausführung der Erfindung darstellt, sind die Gelenke 5 paarweise auf Drehtischen 6a, 6b, 6c angeordnet. Jeder Drehtisch kann um eine zum jeweiligen Schlitten senkrechte Achse relativ zum Schlitten gedreht werden, wobei die Drehbewegungen von der Steuerung 8 kontrolliert werden. Damit lassen sich nicht nur die Winkelfehler der Plattform bzw. Schienen kompensieren, sondern man erhält wieder einen Mechanismus, der die Plattform 1 in sechs Freiheitsgraden relativ zur Basis 2 bewegen kann.

Es kann auch sinnvoll sein, Kombinationen der Varianten von Fig. 1 und Fig. 10 auszuführen, indem ein Teil der Schlitten die Fusspunkte von jeweils zwei Stäben linear bewegen und die restlichen Schlitten nur einen. Beispielsweise lassen sich die Gelenke der zwei Stäbe 4a und 4b von Fig. 10 statt auf dem Schlitten 6a auf zwei einzelnen Schlitten montieren, die auf den Führungen 7a und 7c bewegt werden. Auf diese Weise spart man eine Linearführung und kann den Raum zwischen den beiden verbleibenden Führungen auf die gleiche Art nutzen wie in der Ausfuhrung von Fig. 8. Die Plattform kann in drei Freiheitsgraden bewegt werden. Versieht man die Schlitten, die zwei Stäbe bewegen, mit Vorrichtungen, die die Lage der Gelenkpunkte zueinander oder relativ zum jeweiligen Schlitten gesteuert verändern können, kann man die Plattform in sechs Freiheitsgraden bewegen. Diese Varianten stellen jedoch nur insoweit Ausführungen des Erfindung das, als sie vom Schutzbereich des Ansprüche abgedeckt sind.

## Patentansprüche

1. Bewegungsvorrichtung für eine Werkzeugmaschine oder einen Manipulator, mit einer Basis (2), einem gegenüber der Basis beweglichen Teil (1), mit mindestens sechs Beinen (4a - 4f) zur Verbindung der Basis (2) mit dem beweglichen Teil (1), wobei die Beine gelenkig mit dem beweglichen Teil (1) verbunden sind und basisseitig gelenkig auf Schlitten (6a - 6f) ruhen, wobei die Schlitten entlang im wesentlichen paralleler, zur Basis (2) feststehender Schienen (7a - 7c) längsverschiebbar sind, und wobei für jeden Schlitten ein Antrieb (15, 16) und für die Antriebe eine Steuerung (8) vorgesehen ist, dadurch gekennzeichnet, dass mindestens vier unabhängig voneinander verfahrbare Schlitten (6a - 6f) vorgesehen sind, von denen jeder mindestens ein Bein trägt, und dass mindestens eine der Schienen (7a - 7c) zwei Schlitten trägt, derart, dass der bewegliche Teil (1) linear verfahrbar und verkippbar ist.

2. Vorrichtung nach Anspruch 1, dadurch gekennzeichnet, dass sechs unabhängig voneinander verfahrbare Schlitten (6a - 6f) vorgesehen sind, von denen jeder genau ein Bein trägt.

3. Vorrichtung nach einem der vorangehenden Ansprüche, dadurch gekennzeichnet, dass ein erster Teil (16) jedes Antriebs an der jeweiligen Schiene oder der Basis (2) und ein zweiter Teil (15) jedes Antriebs am jeweiligen Schlitten angeordnet ist, und dass der erste Teil der Antriebe für Schlitten, die auf der gleichen Schiene laufen, gemeinsam ist, und wobei die Antriebe insbesondere elektromagnetische Linearmotoren sind, wobei der zweite Teil (15) vorzugsweise eine elektrisch ansteuerbare Spulenanordnung umfasst.

4. Vorrichtung nach einem der vorangehenden Ansprüche, dadurch gekennzeichnet, dass jeder Schlitten einen Sensor (17, 18) zum Feststellen der Position des Schlittens auf der jeweiligen Schiene aufweist, wobei ein erster Teil (18) jedes Sensors an der jeweiligen Schiene oder der Basis (2) und ein zweiter Teil (17) jedes Sensors am jeweiligen Schlitten angeordnet ist, und dass der erste Teil der Sensoren für Schlitten, die auf der gleichen Schiene laufen, gemeinsam ist.

5. Vorrichtung nach einem der vorangehenden Ansprüche, dadurch gekennzeichnet, dass jedes Bein (4a - 4f) gegenüber dem jeweiligen Schlitten (6a - 6f) um drei und gegenüber dem beweglichen Teil (1) um mindestens zwei und/oder gegenüber dem jeweiligen Schlitten (6a - 6f) um mindestens zwei und gegenüber dem beweglichen Teil (1) um drei Drehachsen bewegbar ist, wobei insbesondere mindestens ein Teil der Beine (4a - 4f) in Paaren zusammengefasst ist und die Beine jedes Paares mit dem beweglichen Teil (1) über mindestens eine, insbesondere zwei oder drei, gemeinsame Drehachse(n) (40, 41; 43; 45) verbunden sind.

6. Vorrichtung nach einem der vorangehenden Ansprüche, dadurch gekennzeichnet, dass die Schienen im wesentlichen entlang ihrer ganzen Länge auf der Basis (2) aufliegen.

7. Vorrichtung nach einem der vorangehenden Ansprüche, dadurch gekennzeichnet, dass die Basis (2) eine im wesentlichen planare Oberfläche aufweist, auf welcher die Schienen in einer Ebene angeordnet sind, und
dass die Basis (2) vorzugsweise Mittel (55) zum Aufnehmen eines Werkstücks oder Werkzeugs aufweist und die Schienen zu beiden Seiten des Mittels angeordnet sind, oder
dass die Basis (2) ein im wesentlichen C-förmiges Profil bildet, wobei sich die Schienen entlang der Innenseite des Profils erstrecken.

8. Vorrichtung nach einem der vorangehenden Ansprüche, dadurch gekennzeichnet, dass mindestens ein Teil der Beine (4a - 4f) in der Länge änderbar ist.

9. Vorrichtung nach einem der vorangehenden Ansprüche, dadurch gekennzeichnet, dass die Schlitten in einer Verschiebungsrichtung längsverschiebbar sind, und dass alle Schlitten um die Verschiebungsrichtung nichtverkippbar auf den Schienen gelagert sind.

10. Vorrichtung nach Anspruch 9, dadurch gekennzeichnet, dass jede Schiene (7a - 7c) mindestens zwei Schienenstränge aufweist, wobei jeder Schienenstrang im wesentlichen entlang seiner ganzen Länge auf der Basis (2) aufliegt, und wobei jeder Schlitten mit beiden Schienensträngen seiner Schiene in Kontakt steht.

11. Vorrichtung nach einem der vorangehenden Ansprüche, dadurch gekennzeichnet, dass mindestens auf einem der Schlitten (6a - 6f) zwei Beine (4a - 4f) angeordnet sind.

12. Vorrichtung nach Anspruch 11, dadurch gekennzeichnet, dass auf dem mindestens einen Schlitten, auf dem zwei Beine (4a - 4f) angeordnet sind, Mittel (60a - 60c) vorgesehen sind, mit denen die relative Lage der Beine (4a -4f) zueinander und/oder zum jeweiligen Schlitten gesteuert änderbar ist, vorzugsweise indem die zwei Beine (4a - 4f) auf einem Drehtisch angeordnet sind, wobei der Drehtisch relativ zum Schlitten drehbar ist.

13. Werkzeugmaschine mit einer Vorrichtung nach einem der vorangehenden Ansprüche.

## Claims

1. Movement device for a machine tool or a robot with a base (2), a, in respect to the base, mobile part (1), with at least six legs (4a - 4f) for connecting the base (2) to the mobile part (1), wherein the legs are connected in articulated manner to the mobile part (1) and rest, on their base side, in articulated manner on sliding carriages (6a - 6f), and wherein the sliding carriages are longitudinally displaceable along tracks (7a - 7c) that are immobile in respect to said base (2) and substantially parallel, and wherein a drive (15, 16) is provided for each sliding carriage and a control (8) for the drives, characterised in that at least four sliding carriages (6a - 6f) are provided that are displaceable independently of each other, each of which is carrying at least one leg, and that at least one of the tracks (7a - 7c) carries two sliding carriages, such that the mobile part (1) is linear displaceable and tiltable.

2. Device of claim 1 characterised in that six sliding carriages (6a - 6f) displaceable independently of each other are provided, each of which is carrying exactly one leg.

3. Device of one of the preceding claims characterised in that a first part (16) of each drive is mounted to the corresponding track or to the base (2) and a second part (15) of each drive is arranged on the corresponding sliding carriage, and that the first part of the drives is in common for sliding carriages running on the same track, and in particular wherein the drives are electromagnetic linear motors, wherein the second part (15) preferably comprises an electrically operated coil assembly.

4. Device of one of the preceding claims characterised in that each sliding carriage comprises a sensor (17, 18) for detecting the position of the sliding carriage on the corresponding track, wherein a first part (18) of each sensor is arranged on the corresponding track or the base (2) and a second part (17) of each sensor is arranged on the corresponding sliding carriage, and that the first part of the sensors is in common for sliding carriages running on the same track.

5. Device of one of the preceding claims characterised in that each leg (4a - 4f) is movable in respect to the corresponding sliding carriage (6a - 6f) about three rotational axes and in respect to the mobile part (1) about at least two rotational axes and/or in respect to the corresponding sliding carriage (6a - 6f) about at least two and in respect to the mobile part (1) about three rotational axes, in particular wherein at least a part of the legs (4a - 4f) is grouped in pairs and the legs of each pair are connected to the mobile part (1) by means of at least one, in particular two or three, common rotational axes (40, 41; 43; 45).

6. Device of one of the preceding claims characterised in that the tracks are resting substantially along their whole length against the base (2).

7. Device of one of the preceding claims characterised in that the base (2) comprises a substantially planar surface, upon which the tracks are arranged in a plane, and
preferably that the base (2) comprises means (55) for receiving a workpiece or a tool and the tracks are arranged on both sides of the means, or
that the base (2) forms a substantially C-shaped profile wherein the tracks extend along an inner side of the profile.

8. Device of one of the preceding claims characterized in that at least a part of the legs (4a - 4f) can be changed in length.

9. Device of one of the preceding claims characterised in that the sliding carriages are longitudinally displaceable in a direction of displacement and that all sliding carriages are mounted non-tiltably about the direction of displacement on the tracks.

10. Device of claim 9 characterised in that each track (7a - 7c) comprises at least two beams, each beam resting substantially along its whole length on the base (2), and wherein each sliding carriage is in contact with both beams of its track.

11. Device of one of the preceding claims characterised in that on at least one of said carriages there are two legs (4a - 4f) arranged.

12. Device of claim 11 characterized in that on the at least one sliding carriage on which two legs (4a - 4f) are arranged means (60a - 60c) are provided for controlled adjustment of the relative position of the legs (4a - 4f) in respect to each other and/or in respect to the corresponding sliding carriage, preferably by the two legs (4a - 4f) being mounted on a rotating table, wherein the rotating table can be rotated in respect to the sliding carriage.

13. Machine tool with a device of one of the preceding claims.

## Revendications

1. Dispositif de déplacement pour machine-outil ou manipulateur, avec une base (2), un élément mobile (1) par rapport à cette base, avec au moins six bras (4a - 4f) réunissant la base (2) à l'élément mobile (1), ces bras étant articulés sur l'élément mobile (1) et articulés du côté de la base sur des chariots (6a - 6f) déplaçables le long de rails (7a - 7c), essentiellement parallèles et immobiles par rapport à la base (2), un dispositif d'entraînement (15, 16) et une commande (8) pour celui-ci étant prévus pour chaque chariot, caractérisé en ce qu'il est prévu au moins quatre chariots (6a - 6f) déplaçables indépendamment les uns des autres et dont chacun porte au moins un bras, et en ce qu'au moins un rail (7a - 7c) porte deux chariots de façon à ce que l'élément mobile (1) soit déplaçable linéairement et puisse être basculé.

2. Dispositif selon la revendication 1, caractérisé en ce qu'il est prévu six chariots (6a - 6f) déplaçables indépendamment les uns des autres, et dont chacun porte exactement un bras.

3. Dispositif selon une des revendications précédentes, caractérisé en ce qu'une première partie (16) de chaque dispositif d'entraînement est agencée sur le rail correspondant ou sur la base (2), qu'une seconde partie (15) de chaque dispositif d'entraînement est agencée sur le chariot correspondant, que la première partie des dispositifs d'entraînement est commune pour les chariots disposés sur un même rail, les dispositifs d'entraînement étant en particulier des moteurs électromagnétiques linéaires, ladite seconde partie (15) comportant de préférence un système de bobines à commande électrique.

4. Dispositif selon une des revendications précédentes, caractérisé en ce que chaque chariot comporte un senseur (17, 18) pour déterminer la position du chariot sur son rail, une première partie (18) de chaque senseur étant agencée sur le rail correspondant ou sur la base (2) et une seconde partie (17) de chaque senseur étant agencée sur le chariot correspondant, la première partie des senseurs étant la même pour tous les chariots se mouvant le long du même rail.

5. Dispositif selon une des revendications précédentes, caractérisé en ce que chaque bras (4a - 4f) est mobile autour de trois axes par rapport au chariot correspondant (6a - 6f) ainsi qu'autour d'au moins deux axes par rapport à l'élément mobile (1) et/ou qu'il est mobile autour d'au moins deux axes par rapport au chariot correspondant (6a - 6f) ainsi qu'autour de trois axes par rapport à l'élément mobile (1), au moins certains bras (4a-4f) étant en particulier associés par paires, les bras de chaque paire étant articulés sur l'élément mobile (1) par l'intermédiaire d'au moins un, et en particulier de deux ou trois axes de rotation commun(s) (40, 41; 43; 45).

6. Dispositif selon une des revendications précédentes, caractérisé en ce que les rails reposent sur la base (2) essentiellement le long de toute leur longueur.

7. Dispositif selon une des revendications précédente, caractérisé en ce que la base (2) comporte une surface essentiellement plane sur laquelle les rails sont agencés dans un plan, et
que la base (2) comporte de préférence des moyens (55) pour recevoir un outil ou une pièce à usiner, les rails étant disposés de part et d'autre de ce moyen, ou
que la base (2) forme un profil essentiellement en forme de C, les rails s'étendant le long de l'intérieur du profil.

8. Dispositif selon une des revendications précédentes, caractérisé en ce qu'au moins certains bras (4a - 4f) sont de longueur variable.

9. Dispositif selon une des revendications précédentes, caractérisé en ce que les chariots sont déplaçables longitudinalement en une direction, et que tous les chariots sont agencés sur les rails de façon à ne pas pouvoir basculer autour de la direction du déplacement.

10. Dispositif selon la revendication 9, caractérisé en ce que chaque rail (7a - 7c) comporte au moins deux coulisses reposant chacune sur essentiellement toute sa longueur sur la base (2), chaque chariot étant en contact avec les deux coulisses de son rail.

11. Dispositif selon une des revendications précédentes, caractérisé en ce que deux bras (4a - 4f) sont agencés sur au moins un des chariots (6a - 6f).

12. Dispositif selon la revendication 11, caractérisé en ce que le ou les chariots portant deux bras (4a - 4f) comporte des moyens (60a - 60c) permettant de varier la position des bras (4a - 4f) l'un par rapport à l'autre et/ou par rapport au chariot correspondant, de préférence par montage des bras (4a - 4f) sur une plaque rotative tourillonnant sur le chariot.

13. Machine-outil comportant un dispositif selon une des revendications précédentes.
